# EUROPEAN PATENT SPECIFICATION

(11) **EP 4 103 806 B1**
(45) Date of publication and mention of the grant of the patent: **25.09.2024**
(21) Application number: 21704784.4
(22) Date of filing: 11.02.2021
(51) Int. Cl.: E05D 7/06, E05D 7/081, E05D 11/08, E05F 1/06, E05F 3/14, E05F 3/20, E05F 5/02, E05D 15/48

(54) **HINGE ASSEMBLY FOR A DOOR OF A REFRIGERATING COMPARTMENT**
SCHARNIERANORDNUNG FÜR EINE TÜR EINES KÜHLKOMPARTMENTS
DISPOSITION DE CHARNIÈRE POUR UNE PORTE D'UN COMPARTIMENT RÉFRIGÉRATEUR

(30) Priority: 14.02.2020 DK PA202070086
(43) Date of publication of application: 21.12.2022
(73) Proprietor: Rehau-Behr A/S, 8370 Hadsten (DK)
(72) Inventor: LANZL, Thomas, 93055 Regensburg (DE)
(74) Representative: Høiberg P/S
(86) International application number: PCT/EP2021/053340
(87) International publication number: WO 2021/160742

(56) References cited:
- EP-A1- 3 045 846
- KR-A- 20000 051 415
- KR-A- 20000 051 589
- KR-B1- 101 975 265

## Description

### Field of the invention

The present invention relates to a hinge assembly suitable for a door of a refrigerating compartment, in particular a chiller cabinet.

### Background

Vertical doors of refrigerating compartment are often provided with means for ensuring that the door will be closed after it has been opened by e.g. a customer, mainly for saving of energy by preventing the warmer air from the surroundings to enter into the inner of the refrigerating compartment, which air also often has a higher absolute humidity, which may cause deposition of frozen water on the evaporator inside the refrigerating compartment. Different means has been applied to prevent a hard impact between the door and the frame of the refrigerating compartment, in particular when the door is forced towards the closed position.

It is an object of the present invention to provide an improved hinge assembly, with optimized means to prevent a hard impact between the door and the frame of the refrigerating compartment.

KR 101 975 265 B1 discloses a rotation damping device for a hinge connection comprising an inner rotation base unit coaxially arrange inside a ring coupling unit. The two units can rotate independently. A radial extending groove is provided at the interface between the two units, providing a locking protusion. The hinge connection can rotate freely withing a pre-set opening/closing angle, and at a reduced/damped speed when the angle of the hinge connection is close to a fully open or fully closed value.

EP 3 045 846 A1 discloses a door arrangement with a self closing mechanism utilizing a sloping surface in the hinge connection.

KR 2000 0051415 A discloses a tilting mechanism that is applied in the vicinity of a hinge connection, but not as an integral part of the hinge connection.

### Brief description of the invention

The present invention relates to a hinge assembly for a door arranged to facilitate opening and closing said door when attached to a refrigerating compartment, wherein the hinge assembly comprises
a hinge pin of a substantially elongated shape, arranged to be fixed to the door at one end and having a pin connector part at an opposite second end, wherein a first axis comprises said longitudinal centre-axis of said hinge pin,
a rotation damper arranged to be fixed to a frame part of the refrigerating compartment, wherein the rotation damper is connected to a damper connector part arranged to cooperate with the pin connector part for transferring torque around a second axis of rotation between the damper connector part and the pin connector part throughout an opening angle of the door, such that a rotational movement of said damper connector part about said second axis of rotation in at least a first rotational direction is dampened by said rotation damper,
wherein the pin connector part and the damper connection part are arranged to allow an initial closing angle of rotation of the door before the damper acts on the rotation of the hinge pin, the initial closing angle being at least 2°, such as in the range of 3° to 20°, more preferably in the range of 4° to 8°, and the initial closing angle being an angle of rotation of the door towards a closed position thereof immediately after an opening rotation of the door in the opposite direction of rotation,
wherein the hinge assembly the pin connector part is arranged with said damper connector part so as to allow a tilting of the hinge pin independently of the damper connector part without the tilting causing a torque between the pin connector part and the damper connector part, wherein said tilting may amount to an angle between said first axis of the hinge pin and said second axis of rotation of the damper connector part of at least 5°, preferably at least 8°.

By providing the connection between the door and the damper, i.e. the pin connector part and the damper connector part in a manner that allows a certain mutual closing rotation of the door before the damper will act on the rotation, a simple arrangement may be provided. One solution is exemplified below with reference to the drawings, another possible solution could include an elliptic connector part in an elliptic opening of larger dimensions and yet other solutions could be envisaged by the skilled person.

A preferred connection between the door and the damper is provided wherein one of the pin connector part and the damper connector part comprises one or more protrusions extending radially in a direction perpendicular to a longitudinal centre-axis of said connector part, and
wherein the other of the pin connector part and the damper connector part comprises one or more recesses in one or more walls thereon, wherein each protrusion is positioned within one of the recesses(s) during any axial movement and rotational movement of said hinge assembly, the protrusion(s) are arranged to engage with the wall(s) of the connector part upon rotational movement of said hinge pin such that the connector part is forced into a rotational movement about said second axis of rotation, and
wherein the radial width of the protrusion(s), i.e. the extent of the protrusion(s) in the radial direction, is smaller than the radial width of the corresponding recesses(s), thereby allowing for the initial closing angle of the door. The difference in radial width of the protrusions and the recesses amount to a difference in angular extent of the protrusions and of the recesses, and that difference is equal to the initial closing angle of the door.

In a particular embodiment, one of the pin connector part and the damper connection part comprises one or more walls surrounding the other of the pin connector part and the damper connector part, wherein a tilting space is concentrically provided between the pin connector part and the damper connector part, wherein the tilting space allows for tilting of said hinge pin independent of said damper connector part.

It is further preferred that the hinge assembly comprises a self-closing mechanism comprising a first sloping surface arranged to rotate with the door and a second sloping surface directed towards said first sloping surface and arranged to be stationary with respect to the refrigerating compartment, wherein the first and the second sloping surfaces are arranged to be in abutment such that a rotational movement of the door relative to refrigerating compartment provides an axial displacement of the door relatively to the refrigerating compartment in the vertical direction.

In particular, said first recesses(s) may be of a shape allowing at least axial movement of the one or more protrusions within the first recesses, provides a guiding slot in said connector part in which the one or more protrusions of the hinge pin can move, so that a rotational movement of the hinge pin in turn forces the connector part into a rotational movement about said second axis of rotation caused by an interaction between the protrusions and the one or more walls.

The present invention further relates to a refrigerating compartment comprising at least one door provided with a hinge assembly as disclosed herein.

### Brief description of the drawings

Aspects of the present disclosure are exemplified with reference made to the enclosed drawings of which:
Fig.1 shows a refrigerated furniture comprising a refrigerating compartment having a number of doors,
Fig. 2 shows a detail of the furniture of Fig. 1 with the lower part of a door and a hinge assembly,
Fig. 3 shows hidden details of the view in Fig. 2,

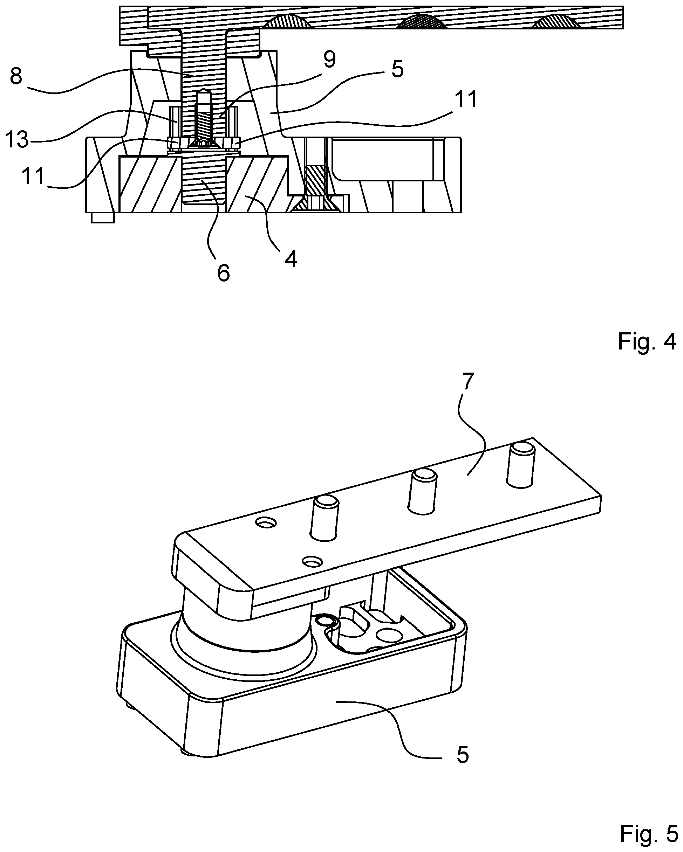

Fig. 4 shows a cross section of the hinge assembly,
Fig. 5 shows a perspective view of the hinge assembly,
Fig. 6 shows a perspective view of the lower, stationary part of the hinge assembly,
Fig. 7 shows a perspective view of hidden details of the hinge assembly,
Figs. 8a, 8b, and 8c show a horizontal cross-sectional view of the pin connector part and the damper connection part at various mutual positions during operation of the door,
Fig. 9 shows the door at various positions during closing of the door, and
Figs. 10 illustrates the pin connection part tilted with respect to the damper connection part.

### Detailed description

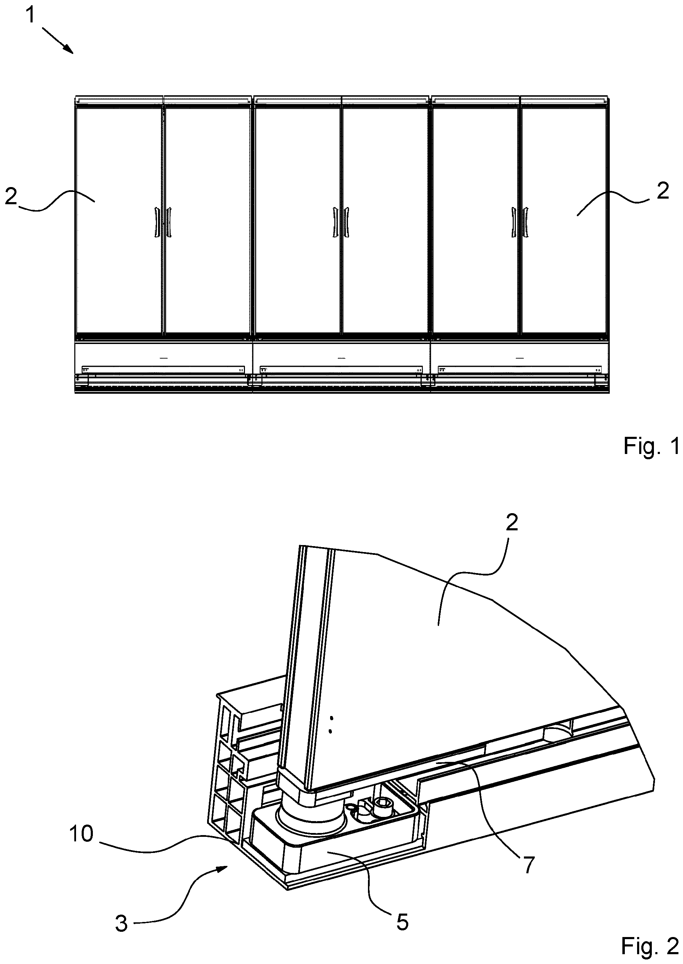

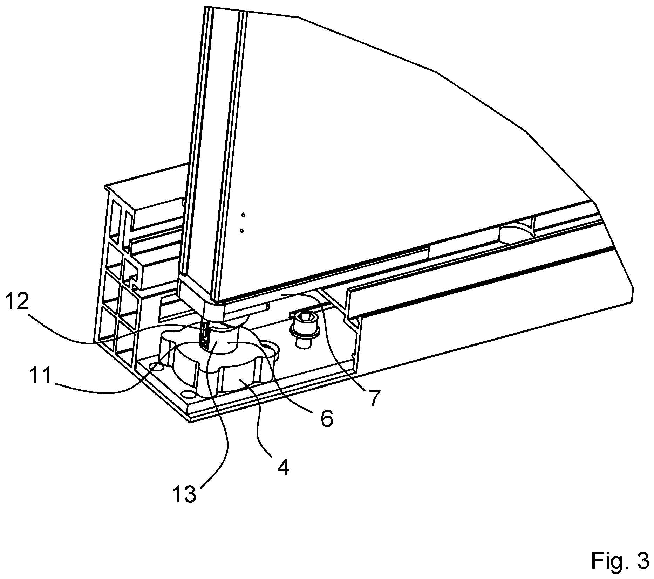

The refrigerating compartment 1 shown in Fig. 1 has a plurality of vertical doors 2 for providing access to the interior of the compartment, where cooled or frozen goods can be stored and displayed for customers. At the bottom corner of the door 2 where it is connected to the frame part 10 of the refrigerating compartment 1 is arranged a hinge assembly 3 as shown in e.g. Figs. 2 and 3.

The hinge assembly 3 comprises a stationary hinge part 5 mounted to the frame part 10 and enclosing a rotational damper 4, which is shown in Fig. 3, and a hinge-mounting bracket 7 for mounting at the lower edge of the door 2. A damper connection part 6 is provided to transfer a rotating motion from the hinge pin 8 fixed to the hinge-mounting bracket 7 to the damper 4 and to transfer torque between the hinge pin 8 and the damper 4.

The damper 4 is a one-way rotational damper, which is arranged for allowing undampened opening movement of the door 2 whereas the closing movement of the door 2 will, at least to a certain extent, be dampened by the damper 4.

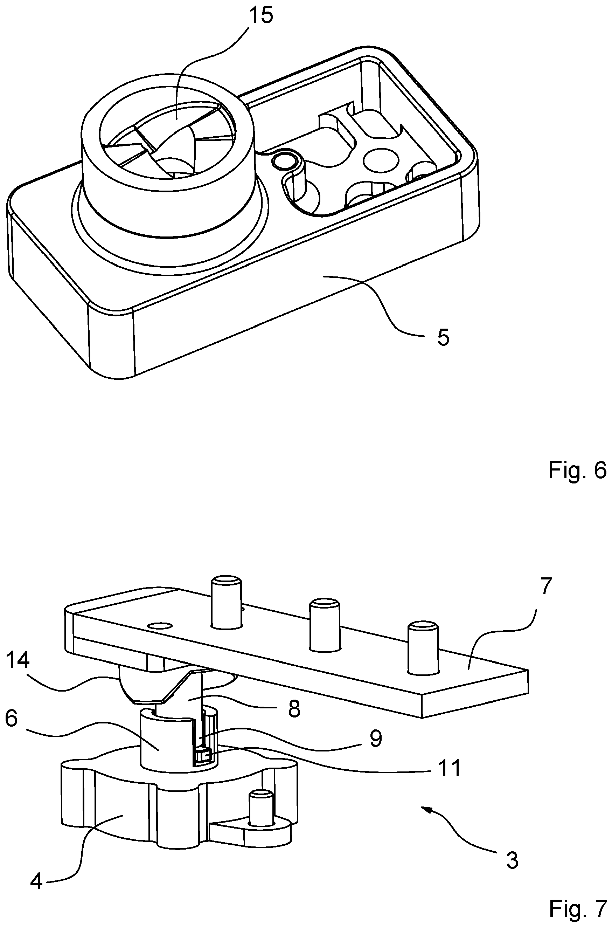

The hinge assembly 3 is provided with a gravity-driven self-closing mechanism comprising a first sloping surface 14 arranged on the hinge mounting bracket 7 as shown in Fig. 7 which is arranged co cooperate with a second sloping surface 15 formed in the stationary hinge part 5 as shown in Fig. 6. The first and the second sloping surfaces 14, 15 are arranged to be in abutment such that a rotational movement of the door 2 relative to the refrigerating compartment 1 provides an axial displacement of the door 2 relatively to the refrigerating compartment 1. When the door 2 is opened by e.g. a customer, it is at the same time moved upwards by the interaction between the first sloping surface 14 and the second sloping surface 15 and when the customer releases the open door 2, the self-closing mechanism will make the door 2 turn backtowards the closed position the due to the force of gravity on the door 2. Thus, during the opening and closing of the door 2, it will move in an axial direction with respect to the refrigerating compartment 1.

The pin connector part 9 is provided with two protrusions 11 extending radially from the pin connector part 9 into corresponding recesses 12 in a wall part 13 of the damper connection part 6, which recesses 12 extend in an axial direction of the damper connection part 9 so as to form guiding slots for the protrusions 11 when the hinge pin 8 is moved axially with respect to the damper 4 and the damper connection part 6 during rotational movement of the door 2.

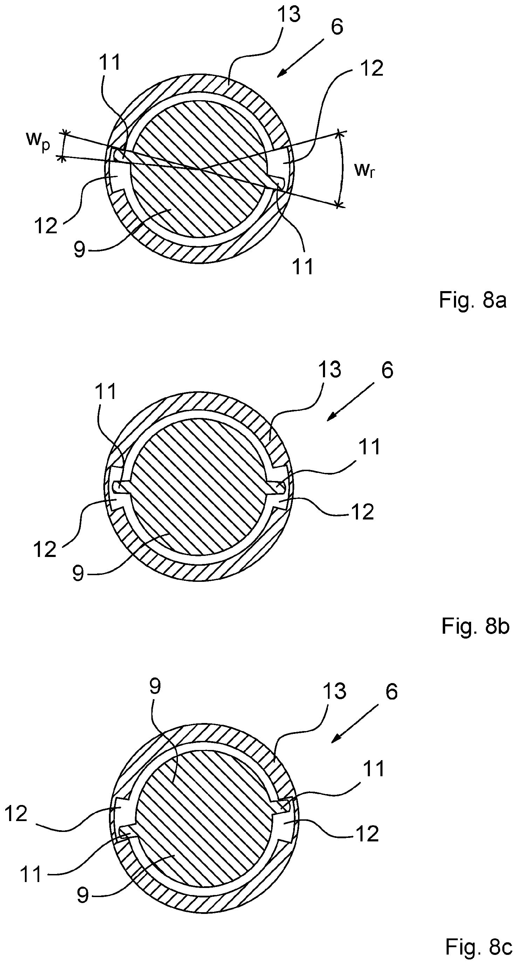

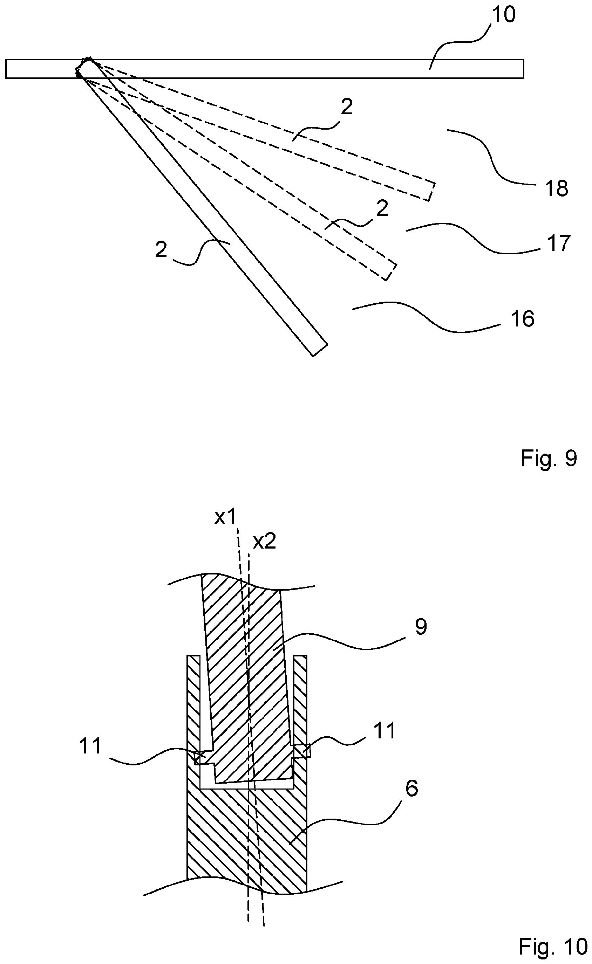

The recesses 12 has a radial width Wr which is some degrees larger than the radial width Wp of the protrusions 11 which means that when the door 2 is being opened, the protrusions 11 are in abutment with one side of the recesses 12 as shown in Fig. 8a. When the door 2 is released in the opened position, the gravity-driven self-closing mechanism comprising the first and the second sloping surfaces 14, 15 will reverse the direction of rotation of the door 2 towards the closed position and the pin connector part 9 with the protrusions 11 will rotate within the recesses 12 at an angle equal to the difference between the radial width Wr of the recesses and the radial width Wp of the protrusions without also rotating the damper connection part 6 as shown in Fig. 8b. This angular difference Wr - Wp allows for an undampened acceleration of the rotational speed of the door 2 towards the closed position, and the angular difference may be at least 2°, such as 5° or 8°, where after the protrusions 11 come into abutting contact with the other side of the recesses 12 as shown in Fig. 8c and the rotation of the hinge pin 8 and the pin connector part 9 will rotate the damper connecter part 6 and the rotational damper 4 will start to dampen the rotational movement of the door 2 as shown in Fig. 9 until a constant rotational speed phase is reached which ends when the door 2 makes contact with the frame part 10 of the refrigerating compartment 1. The advantage of having the angu lar difference Wr - Wp which is the angle through which the door will accelerate undampened is that the door 2 will close faster than it would if the damper was acting on the rotation of the door 2 from the very beginning of the closing movement of the door 2 and that the period the door 2 will remain open thereby is shortened. Thus, less hot air will enter the compartment 1 and the energy consumption of the refrigerating compartment 1 is reduced.

Fig. 9 shows the various stages of the closing movement of the door 2 as seen from above, the first stage 16 being the undampened acceleration of the door 2, the second stage 17 being the dampened movement where the damper 4 adjusts the closing speed of the door 2 to the third stage 18 where the closing speed of the door 2 is constant until the door 2 makes contact with the frame 10 of the refrigerating compartment 1 and the movements stops.

The outer diameter of the pin connector part 9 is less than the inner diameter of the wall part 13 of damper connection part 6 to allow a tilting of the hinge pin 8 independently of the damper connector part 6 as shown in Fig. 10. Due to the mass of the glass door 2, which typically is made with at least two parallel glass panes is and quite heavy, the door 2 will be prone to sag, which means that the axis of rotation of the door 2 will have a tendency to be tilting with respect to the frame part 10 of the refrigerating compartment 1, where the damper 4 and damper connection part 6 are oriented about a second axis X2 of rotation. With the present construction, it is achieved that a possible tilting of the hinge pin 8 will not cause a torque to be transferred between the pin connector part 9 and the damper connector part 6. Said tilting may amount to an angle between said first axis X1 of the hinge pin 8 and said second axis of rotation X2 of the damper connector part 6 of at least 5°, preferably at least 8°.

### List of reference numerals

- 1: Refrigerating compartment
- 2: Door of refrigerated compartment
- 3: Hinge assembly
- 4: Damper
- 5: Stationary hinge part
- 6: Damper connection part
- 7: Hinge mounting bracket
- 8: Hinge pin
- 9: Pin connector part
- 10: Frame part of refrigerating compartment
- 11: Protrusions on pin connector part
- 12: Recess
- 13: Wall part of damper connection part
- 14: First sloping surface
- 15: Second sloping surface
- 16: Acceleration stage of door closing
- 17: Adjustment stage of door closing
- 18: Constant speed stage of door closing

- Wp: Angular extent of protrusion
- Wr: Angular extent of recesses
- X1: First axis
- X2: Second axis of rotation

## Claims

1. A hinge assembly (3) for a door (2) arranged to facilitate opening and closing said door (2) when attached to a refrigerating compartment (1), wherein the hinge assembly (3) comprises
a hinge pin (8) of a substantially elongated shape, arranged to be fixed to the door (2) at one end and having a pin connector part (9) at an opposite second end, wherein a first axis (X1) comprises a longitudinal centre-axis of said hinge pin (8),
a rotation damper (4) arranged to be fixed to a frame part (10) of the refrigerating compartment (1), wherein the rotation damper (4) is connected to a damper connector part (6) arranged to cooperate with the pin connector part (9) for transferring torque around a second axis of rotation (X2) between the damper connector part (6) and the pin connector part (9) throughout an opening angle of the door (2), such that a rotational movement of said damper connector part (6) about said second axis of rotation (X2) in at least a first rotational direction is dampened by said rotation damper (4),
wherein the pin connector part (9) and the damper connection part (6) are arranged to allow an initial closing angle of rotation of the door (2) before the damper (4) acts on the rotation of the hinge pin (9), the initial closing angle being at least 2°, such as in the range of 3° to 20°, and the initial closing angle being an angle of rotation of the door (2) towards a closed position thereof immediately after an opening rotation of the door (2) in the opposite direction of rotation, **characterized in that**
the pin connector part (9) is arranged with said damper connector part (6) so as to allow a tilting of the hinge pin (8) independently of the damper connector part (6) without the tilting causing a torque between the pin connector part (9) and the damper connector part (6), wherein said tilting may amount to angle between said first axis (X1) of the hinge pin (8) and said second axis of rotation (X2) of the damper connector part (6) of at least 5°, preferably at least 8°.

2. Hinge assembly (3) according to claim 1, wherein one of the pin connector part (9) and the damper connector part (6) comprises one or more protrusions (11) extending radially in a direction perpendicular to a longitudinal centre-axis (X1, X2) of said connector part (6, 9), and
wherein the other of the pin connector part (9) and the damper connector part (6) comprises one or more recesses (12) in one or more walls (13) thereon,
wherein each protrusion (11) is positioned within one of the recesses(s) (12) during any axial movement and rotational movement of said hinge assembly (3), the protrusion(s) (11) are arranged to engage with the wall(s) (13) of the connector part (6, 9) upon rotational movement of said hinge pin (8) such that the connector part (6, 9) is forced into a rotational movement about said second axis of rotation (X2), and
wherein the radial width (Wp) of the protrusion(s) (11) is smaller than the radial width (Wr) of the corresponding recesses(s) (12), thereby allowing for the initial closing angle of the door (2).

3. Hinge assembly (3) according to any of the preceding claims, wherein one of the pin connector part (9) and the damper connection part (6) comprises one or more walls (13) surrounding the other of the pin connector part (9) and the damper connector part (6), wherein a tilting space is concentrically provided between the pin connector part (9) and the damper connector part (6), wherein the tilting space allows for tilting of said hinge pin (8) independent of said damper connector part (6).

4. Hinge assembly (3) according to any of the preceding claims, further comprising a self-closing mechanism comprising a first sloping surface (14) arranged to rotate with the door (2) and a second sloping surface (15) directed towards said first sloping surface (14) and arranged to be stationary with respect to the refrigerating compartment (1), wherein the first and the second sloping surfaces (14, 15) are arranged to be in abutment such that a rotational movement of the door (2) relative to refrigerating compartment (1) provides an axial displacement of the door relatively to the refrigerating compartment (1) in the vertical direction.

5. Hinge assembly (3) according to claim 4, wherein said first recesses(s) (12) is of a shape allowing at least axial movement of the one or more protrusions (11) within the first recesses (12), provides a guiding slot in said damper connector part (6) in which the one or more protrusions (11) of the pin connector part (9) can move, so that a rotational movement of the hinge pin (8) in turn forces the damper connector part (6) into a rotational movement about said second axis of rotation (X2) caused by an interaction between the protrusions (11) and the one or more walls (13).

6. A refrigerating compartment (1) comprising at least one door (2) provided with a hinge assembly (3) according to any of claims 1 to 5.

## Patentansprüche

1. Scharnieranordnung (3) für eine Tür (2), die so angeordnet ist, dass sie das Öffnen und Schließen der Tür (2) erleichtert, wenn sie an einem Kühlfach (1) angebracht ist, wobei die Scharnieranordnung (3) Folgendes umfasst:
einen Scharnierstift (8) mit einer im Wesentlichen länglichen Form, der so angeordnet ist, dass er an einem Ende an der Tür (2) befestigt ist und an einem gegenüberliegenden zweiten Ende ein Stiftverbindungsteil (9) aufweist, wobei eine erste Achse (X1) eine Längsmittelachse des Scharnierstifts (8) umfasst,
einen Drehungsdämpfer (4), der zur Befestigung an einem Rahmenteil (10) des Kühlfachs (1) angeordnet ist, wobei der Drehungsdämpfer (4) mit einem Dämpferverbindungsteil (6) verbunden ist, das so angeordnet ist, dass es mit dem Stiftverbindungsteil (9) zum Übertragen eines Drehmoments um eine zweite Drehachse (X2) zwischen dem Dämpferverbindungsteil (6) und dem Stiftverbindungsteil (9) über einen Öffnungswinkel der Tür (2) zusammenwirkt, so dass eine Drehbewegung des Dämpferverbindungsteils (6) um die zweite Drehachse (X2) in mindestens einer ersten Drehrichtung durch den Drehungsdämpfer (4) gedämpft wird,
wobei das Stiftverbindungsteil (9) und das Dämpferverbindungsteil (6) so angeordnet sind, dass sie einen anfänglichen Schließdrehwinkel der Tür (2) ermöglichen, bevor der Dämpfer (4) auf die Drehung des Scharnierstifts (9) einwirkt, wobei der anfängliche Schließwinkel mindestens 2° beträgt, wie etwa im Bereich von 3° bis 20°, und wobei der anfängliche Schließwinkel ein Drehwinkel der Tür (2) in Richtung einer geschlossenen Position unmittelbar nach einer Öffnungsdrehung der Tür (2) in die entgegengesetzte Drehrichtung ist, **dadurch gekennzeichnet, dass**
das Stiftverbindungsteil (9) so mit dem Dämpferverbindungsteil (6) angeordnet ist, dass ein Kippen des Scharnierstifts (8) unabhängig von dem Dämpferverbindungsteil (6) möglich ist, ohne dass durch das Kippen ein Drehmoment zwischen dem Stiftverbindungsteil (9) und dem Dämpferverbindungsteil (6) entsteht, wobei das Kippen einen Winkel zwischen der ersten Achse (X1) des Scharnierstifts (8) und der zweiten Drehachse (X2) des Dämpferverbindungsteils (6) von mindestens 5°, vorzugsweise mindestens 8°, betragen kann.

2. Scharnieranordnung (3) nach Anspruch 1, wobei eines des Stiftverbindungsteils (9) und des Dämpferverbindungsteils (6) einen oder mehrere Vorsprünge (11) aufweist, die sich radial in einer Richtung senkrecht zu einer Längsmittelachse (X1, X2) des Verbindungsteils (6, 9) erstrecken, und
wobei das andere des Stiftverbindungsteils (9) und des Dämpferverbindungsteils (6) eine oder mehrere Aussparungen (12) in einer oder mehreren seiner Wände (13) aufweist,
wobei jeder Vorsprung (11) während einer beliebigen Axialbewegung und Drehbewegung der Scharnieranordnung (3) innerhalb einer der Aussparungen (12) positioniert ist, wobei der oder die Vorsprünge (11) so angeordnet sind, dass sie bei einer Drehbewegung des Scharnierstifts (8) mit der Wand oder den Wänden (13) des Verbindungsteils (6, 9) in Eingriff kommen, so dass das Verbindungsteil (6, 9) zu einer Drehbewegung um die zweite Drehachse (X2) gezwungen wird, und
wobei die radiale Breite (Wp) des oder der Vorsprünge (11) kleiner ist als die radiale Breite (Wr) der entsprechenden Vertiefung(en) (12), wodurch der anfängliche Schließwinkel der Tür (2) ermöglicht wird.

3. Scharnieranordnung (3) nach einem der vorhergehenden Ansprüche, wobei eines des Stiftverbindungsteils (9) und des Dämpferverbindungsteils (6) eine oder mehrere Wände (13) umfasst, die das andere des Stiftverbindungsteils (9) und des Dämpferverbindungsteils (6) umgeben, wobei zwischen dem Stiftverbindungsteil (9) und dem Dämpferverbindungsteil (6) konzentrisch ein Kippraum bereitgestellt ist, wobei der Kippraum ein Kippen des Scharnierstifts (8) unabhängig von dem Dämpferverbindungsteil (6) ermöglicht.

4. Scharnieranordnung (3) nach einem der vorhergehenden Ansprüche, ferner umfassend einen selbstschließenden Mechanismus, der eine erste schräge Oberfläche (14) umfasst, die so angeordnet ist, dass sie sich mit der Tür (2) dreht, und eine zweite schräge Oberfläche (15) umfasst, die in Richtung der ersten schrägen Oberfläche (14) gerichtet und so angeordnet ist, dass sie in Bezug auf das Kühlfach (1) stationär ist, wobei die erste und die zweite schräge Oberfläche (14, 15) so angeordnet sind, dass sie aneinander anliegen, so dass eine Drehbewegung der Tür (2) relativ zum Kühlfach (1) eine axiale Verschiebung der Tür relativ zum Kühlfach (1) in der vertikalen Richtung bereitstellt.

5. Scharnieranordnung (3) nach Anspruch 4, wobei die erste(n) Aussparung(en) (12) eine Form aufweisen, die mindestens eine axiale Bewegung des einen oder mehreren Vorsprünge (11) innerhalb der ersten Aussparung(en) (12) ermöglicht, und einen Führungsschlitz in dem Dämpferverbindungsteil (6) bereitstellt, in dem sich der eine oder die mehreren Vorsprünge (11) des Stiftverbindungsteils (9) bewegen können, so dass eine Drehbewegung des Scharnierstifts (8) wiederum das Dämpferverbindungsteil (6) zu einer Drehbewegung um die zweite Drehachse (X2) zwingt, die durch eine Wechselwirkung zwischen den Vorsprüngen (11) und der einen oder den mehreren Wänden (13) verursacht wird.

6. Kühlfach (1), umfassend mindestens eine Tür (2), die mit einer Scharnieranordnung (3) gemäß einem der Ansprüche 1 bis 5 bereitgestellt ist.

## Revendications

1. Ensemble charnière (3) pour une porte (2) agencé pour faciliter l'ouverture et la fermeture de ladite porte (2) lorsqu'elle est fixée à un compartiment de réfrigération (1), dans lequel l'ensemble charnière (3) comprend
un axe de charnière (8) d'une forme sensiblement allongée, agencé pour être fixé à la porte (2) à une extrémité et présentant une partie de raccord de broche (9) à une seconde extrémité opposée, dans lequel un premier axe (X1) comprend un axe longitudinal central dudit axe de charnière (8),
un amortisseur de rotation (4) agencé pour être fixé à une partie de cadre (10) du compartiment de réfrigération (1), dans lequel l'amortisseur de rotation (4) est relié à une partie de raccord d'amortisseur (6) agencée pour coopérer avec la partie de raccord de broche (9) pour transférer un couple autour d'un second axe de rotation (X2) entre la partie de raccord d'amortisseur (6) et la partie de raccord de broche (9) sur tout un angle d'ouverture de la porte (2), de telle sorte qu'un mouvement de rotation de ladite partie de raccord d'amortisseur (6) autour dudit second axe de rotation (X2) dans au moins un premier sens de rotation est amorti par ledit amortisseur de rotation (4),
dans lequel la partie de raccord de broche (9) et la partie de raccord d'amortisseur (6) sont agencées pour permettre un angle de fermeture initial de rotation de la porte (2) avant que l'amortisseur (4) n'agisse sur la rotation de l'axe de charnière (9), l'angle de fermeture initial étant d'au moins 2°, par exemple dans la plage de 3° à 20°, et l'angle de fermeture initial étant un angle de rotation de la porte (2) vers une position fermée de celle-ci immédiatement après une rotation d'ouverture de la porte (2) dans le sens de rotation opposé, **caractérisé en ce que**
la partie de raccord de broche (9) est agencée avec ladite partie de raccord d'amortisseur (6) de manière à permettre un basculement de l'axe de charnière (8) indépendamment de la partie de raccord d'amortisseur (6) sans que l'inclinaison ne provoque un couple entre la partie de raccord de broche (9) et la partie de raccord d'amortisseur (6), dans lequel ladite inclinaison peut correspondre à un angle entre ledit premier axe (X1) de l'axe de charnière (8) et ledit second axe de rotation (X2) de la partie de raccord d'amortisseur (6) d'au moins 5°, de préférence d'au moins 8°.

2. Ensemble charnière (3) selon la revendication 1, dans lequel l'une de la partie de raccord de broche (9) et de la partie de raccord d'amortisseur (6) comprend une ou plusieurs saillies (11) s'étendant radialement dans une direction perpendiculaire à un axe central longitudinal (X1, X2) de ladite partie de raccord (6, 9), et
dans lequel l'autre élément parmi la partie de raccord de broche (9) et la partie de raccord d'amortisseur (6) comprend un ou plusieurs évidements (12) dans une ou plusieurs parois (13) dessus,
dans lequel chaque saillie (11) est positionnée à l'intérieur de l'un des évidements (12) pendant tout mouvement axial et mouvement de rotation dudit ensemble charnière (3), la ou les saillies (11) sont agencées pour venir en prise avec la ou les parois (13) de la partie de raccord (6, 9) lors d'un mouvement de rotation dudit axe de charnière (8) de telle sorte que la partie de raccord (6, 9) est forcée dans un mouvement de rotation autour dudit second axe de rotation (X2), et
dans lequel la largeur radiale (Wp) de la ou des saillies (11) est inférieure à la largeur radiale (Wr) du ou des évidements correspondants (12), permettant ainsi l'angle de fermeture initial de la porte (2).

3. Ensemble charnière (3) selon l'une quelconque des revendications précédentes, dans lequel un élément parmi la partie de raccord de broche (9) et la partie de raccord d'amortisseur (6) comprend une ou plusieurs parois (13) entourant l'autre élément parmi la partie de raccord de broche (9) et la partie de raccord d'amortisseur (6), dans lequel un espace d'inclinaison est prévu de manière concentrique entre la partie de raccord de broche (9) et la partie de raccord d'amortisseur (6), dans lequel l'espace d'inclinaison permet l'inclinaison dudit axe de charnière (8) indépendamment de ladite partie de raccord d'amortisseur (6).

4. Ensemble charnière (3) selon l'une quelconque des revendications précédentes, comprenant également un mécanisme de fermeture automatique comprenant une première surface inclinée (14) agencée pour tourner avec la porte (2) et une seconde surface inclinée (15) dirigée vers ladite première surface inclinée (14) et agencée pour être fixe par rapport au compartiment de réfrigération (1), dans lequel les première et seconde surfaces inclinées (14, 15) sont agencées pour être en butée de telle sorte qu'un mouvement de rotation de la porte (2) par rapport au compartiment de réfrigération (1) assure un déplacement axial de la porte par rapport au compartiment de réfrigération (1) dans la direction verticale.

5. Ensemble charnière (3) selon la revendication 4, dans lequel le ou lesdits premiers évidements (12) ont une forme permettant au moins un mouvement axial des une ou plusieurs saillies (11) à l'intérieur des premiers évidements (12), fournit une fente de guidage dans ladite partie de raccord d'amortisseur (6) dans laquelle les une ou plusieurs saillies (11) de la partie de raccord de broche (9) peuvent se déplacer, de sorte qu'un mouvement de rotation de l'axe de charnière (8) force à son tour la partie de raccord d'amortisseur (6) dans un mouvement de rotation autour dudit second axe de rotation (X2) provoqué par une interaction entre les saillies (11) et les une ou plusieurs parois (13).

6. Compartiment de réfrigération (1) comprenant au moins une porte (2) munie d'un ensemble charnière (3) selon l'une quelconque des revendications 1 à 5.
